## Europäisches Patentamt
## European Patent Office
## Office européen des brevets

(19)

(11) Numéro de publication: **0 285 510**
**B1**

(12) **FASCICULE DE BREVET EUROPEEN**

(45) Date de publication du fascicule du brevet: **17.10.90**

(51) Int. Cl.⁵: **B60C 23/04**

(21) Numéro de dépôt: **88400757.6**

(22) Date de dépôt: **29.03.88**

(54) Dispositif universel d'alarme pour pneumatique de vehicule.

(30) Priorité: **30.03.87 FR 8704390**

(43) Date de publication de la demande:
**05.10.88 Bulletin 88/40**

(45) Mention de la délivrance du brevet:
**17.10.90 Bulletin 90/42**

(84) Etats contractants désignés:
**DE ES GB IT**

(56) Documents cités:
**DE-A- 2 412 580**
**DE-A- 2 504 418**
**DE-A- 2 924 464**
**FR-A- 2 177 947**
**FR-A- 2 564 041**
**FR-A- 2 578 202**
**US-A- 3 787 806**

(73) Titulaire: **JAEGER, 2, rue Baudin,**
**F-92303 Levallois-Perret(FR)**

(72) Inventeur: **Regnault, Serge, 22, rue Milton,**
**F-75009 Paris(FR)**

(74) Mandataire: **Schrimpf, Robert et al, Cabinet**
**Regimbeau 26, Avenue Kléber, F-75116 Paris(FR)**

## Description

La présente invention concerne le domaine des dispositifs d'alarme pour pneumatique de véhicule.

La présente invention concerne plus précisément un dispositif permettant de surveiller la pression interne des pneumatiques de véhicules et de générer une alarme lorsque cette pression tombe sous un seuil prédéterminé.

On a déjà proposé de nombreux dispositifs répondant à cette fonction; de tels dispositifs sont par exemple décrits et représentés dans les demandes de brevet FR-A-2 564 041 et FR-A-2 578 202 déposées par la Demanderesse, ou encore dans les documents FR-A-2 177 947 et DE-A-2 412 580.

Pour l'essentiel, les moyens décrits dans les documents précités comprennent un pressostat porté par une roue de véhicule et sensible à la pression interne d'un pneumatique et des moyens de couplage sans fil permettant de transmettre une information liée à l'état du pressostat, entre la roue du véhicule entraînée en rotation et le châssis du véhicule.

Le pressostat comprend un boîtier qui loge une membrane déformable soumise à la pression interne du pneumatique et des moyens formant interrupteur électrique dont l'état est modifié lorsque la déformation de la membrane dépasse un seuil, correspondant au seuil prédéterminé de pression à détecter.

Les moyens de couplage sans fil comprennent le plus souvent un circuit à bobine dont l'état dépend de l'état des moyens interrupteurs intégrés au pressostat et porté par la jante de la roue en regard d'un circuit associé supporté par le châssis du véhicule et formant circuit oscillant.

Le dispositifs d'alarme du type précité, jusqu'ici disponibles, ont déjà rendu de grands services.

Cependant, ils ne peuvent s'adapter sur tous les types de véhicule ou tous les types de jantes de roue.

La Demanderesse a maintenant posé le problème de concevoir un nouveau dispositif d'alarme pour véhicule automobile qui puisse s'adapter sur tous types de jante, quels que soient la largeur, le diamètre, l'épaisseur de toile et/ou le profil de la jante.

Ce but est atteint, selon l'invention, grâce à un dispositif d'alarme comportant de façon connue en soi un pressostat sensible à la pression interne d'un pneumatique, et des moyens de couplage sans fil permettant de transmettre une information liée à l'état de pressostat, entre la roue du véhicule entraînée en rotation et le châssis du véhicule, le pressostat et les moyens de couplage sans fil étant intégrés à deux sous-ensembles distincts, caractérisé par le fait que ces deux sous-ensembles sont reliés par une liaison souple électriquement conductrice et que la liaison souple est pourvue d'une amorce de rupture.

Grâce à cette disposition, les deux sous-ensembles intégrant respectivement le pressostat et les moyens de couplage sans fil présentent une grande latitude de déplacement relatif, peuvent être supportés par des zones différentes de la jante et sont donc susceptibles de s'adapter sur tout type de jante. De plus, l'amorce de rupture autorise une rupture rapide de la liaison souple dans le cas où un corps étranger tendrait à arracher le sous-ensemble intégrant les moyens de couplage sans fil et tendrait ainsi à exercer une contrainte néfaste sur le sous-ensemble intégrant le pressostat. L'amorce de rupture empêche donc tout endommagement du sous-ensemble logeant le pressostat et garantit l'étanchéité du pneumatique.

Selon un mode de réalisation considéré actuellement préférentiel, le dispositif comprend un premier sous-ensemble composé d'un pressostat sensible à la pression interne d'un pneumatique et comportant des moyens interrupteurs électriques, un canon destiné à recevoir le pressostat et adapté pour être fixé sur la jante, un second sous-ensemble qui comporte un circuit à bobine, et une liaison souple qui comprend deux conducteurs électriques reliant les moyens interrupteurs du pressostat au circuit à bobine, les conducteurs électriques de la liaison souple étant entourés d'une gaine étanche et souple solidaire d'une part d'un coprs servant de support au circuit à bobine, d'autre part, d'une enveloppe enrobant partiellement le canon, la gaine, le corps support de circuit à bobine et l'enveloppe étant réalisés d'une pièce par moulage.

Selon une autre caractéristique avantageuse de l'invention, la gaine étanche de la liaison souple possède une surépaisseur d'étanchéité en prise avec un surmoulage enrobant le circuit à bobine et le corps-support de celui-ci.

D'autres caractéristiques, buts et avantages de la présente invention, apparaîtront à la lecture de la description détaillée qui va suivre et en regard des dessins annexés donnés à titre d'exemples non limitatifs et sur lesquels:

- la figure 1 représente une vue en coupe longitudinale d'un dispositif conforme à la présente invention,
- la figure 2 représente une vue en coupe longitudinale similaire du même dispositif, dans une phase initiale de sa réalisation, avant mise en place des bobines, des moyens sensibles à la pression interne du pneumatique et avant surmoulage,
- la figure 3 représente une vue latérale du dispositif sur la figure 2,
- la figure 4 représente une vue latérale, similaire à la figure 3 d'un dispositif non achevé, et illustre schématiquement plusieurs modes de réalisation qui diffèrent par le positionnement relatif des bobines et des moyens sensibles à la pression interne du pneumatique,
- la figure 5 représente une surépaisseur d'étanchéité réalisée sur la liaison souple,
- la figure 6 représente la phase de compression de la surépaisseur d'étanchéité lors d'un surmoulage,
- la figure 7 représente la surépaisseur d'étanchéité après surmoulage, et
- les figures 8 et 9 représentent deux modes d'implantation du dispositif conforme à la présente invention, sur la jante d'une roue de véhicule automobile.

Comme cela apparaît à l'examen des figures annexées, le dispositif conforme à la présente invention comprend deux sous-ensembles 10, 50 reliés par une liaison souple 80.

Le premier sous-ensemble 10 comprend un canon 20, un pressostat 30, un opercule 28 et une enveloppe 40.

Le deuxième sous-ensemble 50 comprend un corps support de bobine 60, deux bobines électriques 70, 71 et un enrobage 78.

La liaison souple 80 comprend deux conducteurs électriques 82, 84 et une gaine étanche 86.

Le canon 20 est cylindrique, centré sur un axe 21. Le canon est de préférence réalisé en aluminium ou en laiton. Il définit une chambre interne 22, cylindrique, centrée sur l'axe 21 et borgne. La surface externe 23 du canon 20 est filetée. Le canon 20 est muni à l'opposé de son extrémité ouverte, et sur sa surface extérieure d'une collerette annulaire 24, transversale à l'axe 21.

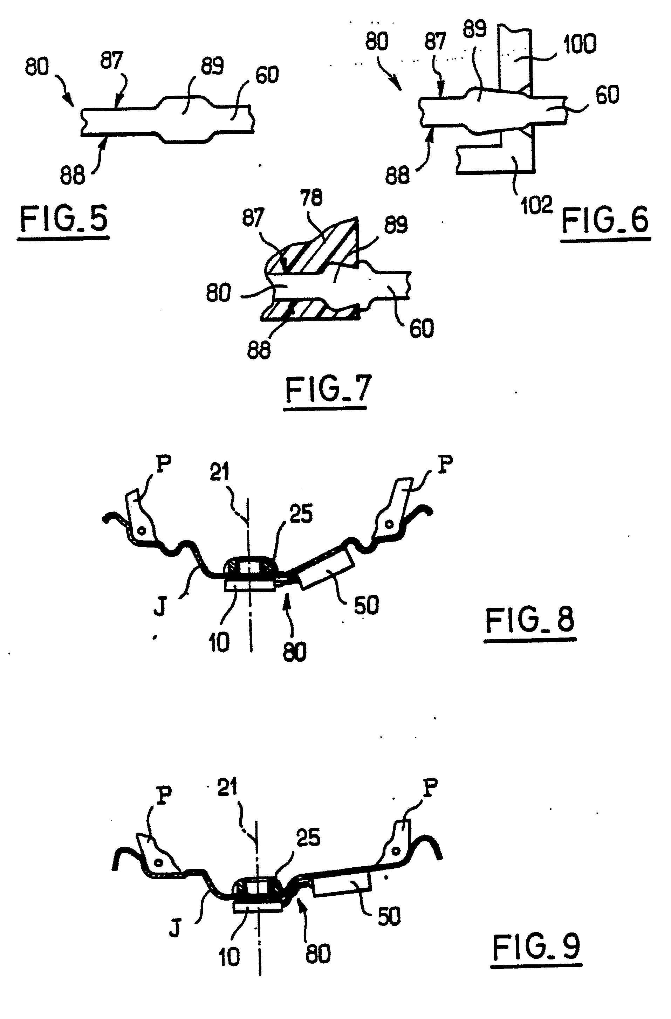

Ainsi, comme illustré schématiquement sur les figures 8 et 9, le canon 20 peut être engagé dans un alésage complémentaire ménagé dans une jante J. de roue et immobilisé sur la jante à l'aide d'un écrou 25 venant en prise avec le filetage externe prévu sur la surface 23 du canon. Après fixation, la jante J est pincée entre la collerette 24 et l'écrou 25. La collerette 24 est placée à l'extérieur du pneumatique P. La chambre interne 22 du canon débouche dans le pneumatique. Le sous-ensemble 10 émerge à l'extérieur de la jante, uniquement par la collerette 24.

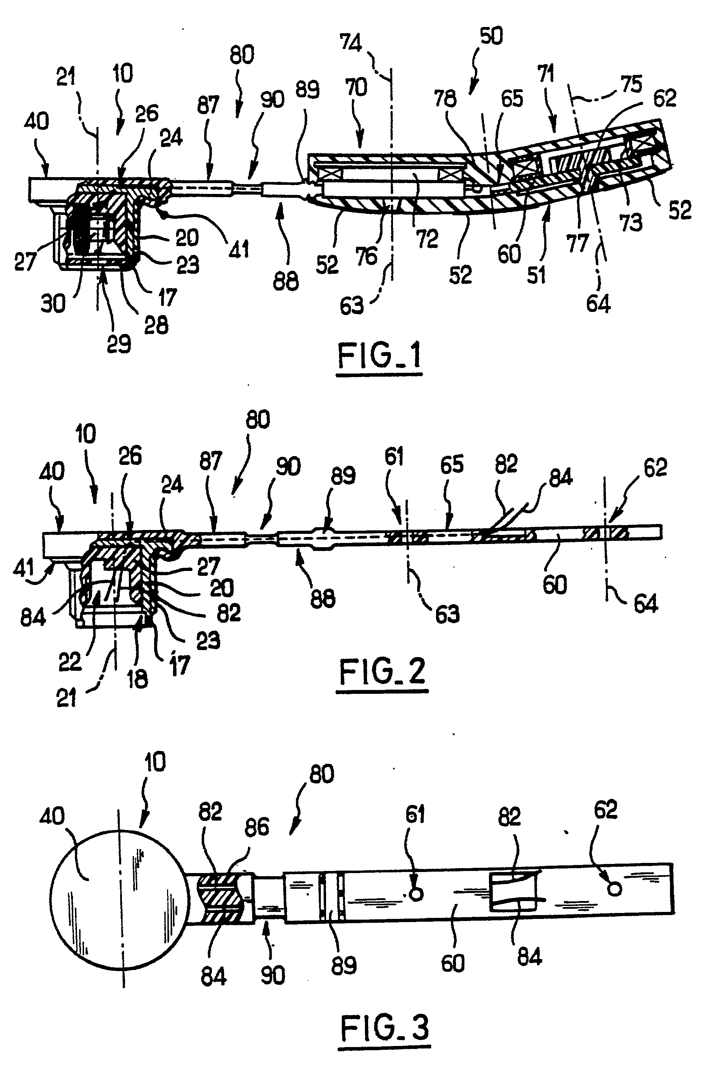

Comme cela apparaît à l'examen des figures 2 et 3, l'enveloppe 40 est solidaire, et réalisée d'une pièce, avec la gaine 86 et le corps 60 supportant les bobines.

L'enveloppe 40, la gaine 86 et le corps support 60 sont de préférence réalisés simultanément par moulage d'un matériau élastomère souple.

Au cours de ce processus de moulage, le canon 20 est placé dans le moule de telle sorte que l'enveloppe 40 recouvre la surface externe 26 du canon, transversale à l'axe 21 et opposée à son ouverture, ainsi que la collerette 24.

Bien entendu l'enveloppe 40 ne doit pas recouvrir le filetage externe 23 du canon.

On notera à l'examen des figures annexées que l'enveloppe 40, sur la surface en couronne de la collerette 24 dirigée vers l'ouverture du canon 20, forme une nervure annulaire d'étanchéité 41 centrée sur l'axe 21. La nervure d'étanchéité 41 a la forme générale d'un demi-tore. En d'autres termes, sa section droite est sensiblement semi-circulaire.

La nervure d'étanchéité 41 peut être formée par une surépaisseur annulaire de matière sur la surface avant, en couronne, de la collerette 24. La nervure d'étanchéité 41 peut encore être formée par recouvrement unifome de la surface avant en couronne de la collerette 24, elle-même pourvue d'une saillie annulaire semi-toroïdale venue de manière.

La nervure d'étanchéité 41 est destinée à reposer contre la surface extérieure de la jante J. Elle est pincée entre la collerette 24 et la jante J pour assurer l'étanchéité du pneumatique.

De préférence, on réalise simultanément à l'enveloppe 40, par moulage, et à l'intérieur de la chambre 22, un berceau 27 complémentaire de la géométrie externe du pressostat 30. Le berceau 27 est destiné à recevoir et immobiliser le pressostat 30.

Le pressostat 30, classique en soi, ne sera pas décrit en détail par la suite. De nombreux types de pressostats sont d'ailleurs susceptibles d'être retenus dans le cadre de la présente invention.

On rappellera cependant que pour l'essentiel le pressostat comprend un boîtier qui loge une membrane déformable soumise à la pression interne du pneumatique et des moyens formant interrupteur électrique, dont l'état (fermé ou ouvert) est modifié lorsque la déformation de la membrane dépasse un seuil, correspondant au seuil prédéterminé de pression à détecter.

Le cas échéant, les moyens interrupteurs peuvent être composés, comme enseigné par le document FR-A-2 578 202 par la membrane déformable elle-même, réalisée en matériau électriquement conducteur, et un plot de contact électriquement conducteur, supporté par le boîtier en regard de la membrane.

L'opercule 28 est formé d'un disque plan pourvu d'un orifice central traversant 29.

Au niveau de son contour d'ouverture, le canon 20 est pourvu d'une jupe cylindrique 17 de faible épaisseur centrée sur l'axe 21. La zone de liaison entre le canon 20 et la jupe 17 définit sur l'intérieur de la jupe 17, un décrochement 18 en forme de couronne annulaire, transversal à l'axe 21 et dirigé vers l'extérieur de la chambre 22. Le diamètre interne de la jupe 17 correspond au diamètre externe de l'opercule 28.

Après mise en place du pressostat 30 dans le berceau, le pressostat 30 est immobilisé dans la chambre 22 par l'opercule 28.

Pour cela l'opercule 28 est engagé dans la jupe 17 et porté en appui contre le dérochement 18. Puis la jupe 17 est serti sur l'opercule 28, comme illustré sur la figure 1.

Bien entendu le berceau 27 ne doit pas entouré totalement le pressostat 30 de telle sorte que la membrane déformable interne au pressostat puisse être soumise à la pression interne du pneumatique, par l'intermédiaire de l'orifice 29 ménagé dans l'opercule 28.

Les conducteurs électriques 82, 84 placés dans la liaison souple 80 sont reliés aux moyens interrupteurs intégrés au pressostat 30. Pour cela, les conducteurs électriques 82, 84 doivent traverser l'enveloppe 40, le canon 20 et le berceau 27. L'enveloppe 40 et le berceau 27 serrent de façon étanche les conducteurs électriques 82, 84, pour éviter toute fuite d'air vers l'extérieur du pneumatique.

La gaine 86 de la liaison souple 80, qui enveloppe les conducteurs 82, 84, s'étend dans une direction générale radiale en regard de l'axe 21. La gaine 86 possède de préférence une section droite, considérée transversalement à sa direction d'élongation, de forme rectangulaire. La largeur de cette section droite s'étend parallèlement à l'axe 21. La longueur de cette section droite s'étend transversalement à l'axe 21.

Ainsi, le plan médian de symétrie de la gaine 85, équidistant des surfaces principales 87, 88 de la gaine, qui s'étend perpendiculairement à l'axe 21 coïncide sensiblement avec le plan de symétrie de la collerette 24.

Le corps 60 destiné à servir de support aux bobines 70, 71 est formé d'une languette plane. Cette languette est pourvue de deux orifices traversant 61, 62. De préférence, les axes 63, 64, des orifices 61, 62, sont au moins sensiblement parallèles à l'axe 21.

Les conducteurs 82, 84 s'étendent en partie à l'intérieur du corps support 60 et émergent sur la face 65 du corps 60, opposée à l'ouverture du canon 20, entre les orifices 61, 62.

Les fils électriquement conducteurs composant les bobines 70, 71 sont enroulés sur des supports généralement cylindriques 72, 73 réalisés en matériau électriquement isolant dont les axes sont référencés 74, 75. Les supports 72, 73 sont pourvus d'embouts de fixation 76, 77, axiaux. Les embouts 76, 77 sont destinés à être engagés dans les orifices 61, 62. Ils sont munis chacun à leur extrémité libre d'une protubérance tronconique effilée en éloignement des supports 72, 73 pour faciliter leur engagement dans les orifices 61, 62. La section de plus grand évasement des protubérances tronconiques précitées des embouts 76, 77 est supérieure à la section des orifices 61, 62.

Après fixation des supports de bobine 72, 73 sur le corps 60, par l'intermédiaire des embouts 76, 77, et liaison, de préférence par soudure, des conducteurs 82, 84 auxdites bobines, celles-ci, ainsi que le corps 60 sont revêtus de l'enrobage surmoulé 78. Celui-ci est réalisé en matériau thermoplastique. Il peut par exemple être réalisé à base de polyuréthane commercialisé sous la marque Adiprène, ou à base de polyamide commercialisé sous la marque Nyrim.

Le cas échéant, d'autres composants associés aux bobines peuvent être supportés par le corps 60 pour être ainsi revêtus simultanément par l'enrobage 78. Il peut par exemple s'agir d'un condensateur reliant les bobines, comme illustré sur les figures 6 et 7 de la demande de brevet FR-A-2 564 001.

Les supports de bobine 72, 73 sont placés contre la surface 65 du corps 60, opposée à l'ouverture du canon 20.

On notera que la liaison souple 80 est pourvue sur sa périphérie d'une surépaisseur ou bourrelet annulaire d'étanchéité 89.

Ce bourrelet 89 est destiné à être recouvert en partie par l'enrobage 78. Il est prévu pour éviter les problèmes d'étanchéité qui pourraient résulter du retrait de la matière composant l'enrobage 78 lors du refroidissement. En effet, en l'absence de bourrelet 89, le retrait de la matière composant l'enrobage 78 pourrait créer un jeu non négligeable sur la périphérie de la gaine 86 et de là permettre à de l'eau d'atteindre les bobines 72, 73 et perturber leur fonctionnement.

Sur la figure 5, on a illustré le bourrelet 89, dans son état initial, sans contrainte extérieure.

Comme illustré sur la figure 6, lors du surmoulage de l'enrobage 78, les coquilles 100, 102 du moule délimitant l'enrobage 78 viennent pincer et écraser l'enrobage 78 sur une partie au moins de sa longueur.

L'enrobage 78 recouvre le reste de la longeur du bourrelet 89.

Ainsi, comme illustré sur la figure 7, à l'ouverture du moule, la partie précédemment écrasée du bourrelet 89 pourra reprendre sa forme initiale pour se plaquer contre l'enrobage 78 et rattraper le jeu dû au retrait de la matière, comme illustré sur la figure 7. L'étanchéité est alors assurée.

On notera de plus à l'examen des figures annexées que la liaison souple 80 est munie, sensiblement à mi-longueur, d'une amorce de rupture 90.

L'amorce de rupture 90 est définie par une zone annulaire ou la matière composant la gaine 86 possède une plus faible épaisseur. En d'autres termes, l'amorce de rupture 90 peut être définie par une rainure annulaire ménagée dans la gaine 86.

Cette amorce de rupture 90 est prévue pour rompre éventuellement la liaison souple 80 dans le cas où un corps étranger viendrait arracher le sous-ensemble 50 logeant les bobines et tendrait à exercer une contrainte néfaste sur le sous-ensemble 10 qui traverse la jante J. L'amorce de rupture 90 empêche donc tout endommagement du sous-ensemble 10 et garantit l'étanchéité du pneumatique.

· Le sous-ensemble 50 pourra être fixé sur la surface extérieure de la jante J à l'aide de tous moyens classiques appropriés. De préférence, le sous-ensemble 50 sera fixé sur la jante J à l'aide d'éléments souples autocollants 52 placés sur sa face 51 opposée à la face 65 du corps 60 et reposant contre la jante J. L'utilisation de tels éléments souples autocollants 52 n'exige aucune adaptation particulière de la jante. De même, elle garantit qu'aucune destruction n'est apportée à la jante J, en cas d'arrachement du sous-ensemble 50.

On notera que ces éléments auto-collants ne subissent aucun effort d'arrachement dans les conditions normales d'utilisation, dans la mesure où le sous-ensemble 50 est placé sur la surface interne du moyeu de jante et de ce fait la force centrifuge tend à plaquer le sous-ensemble 50 contre la jante.

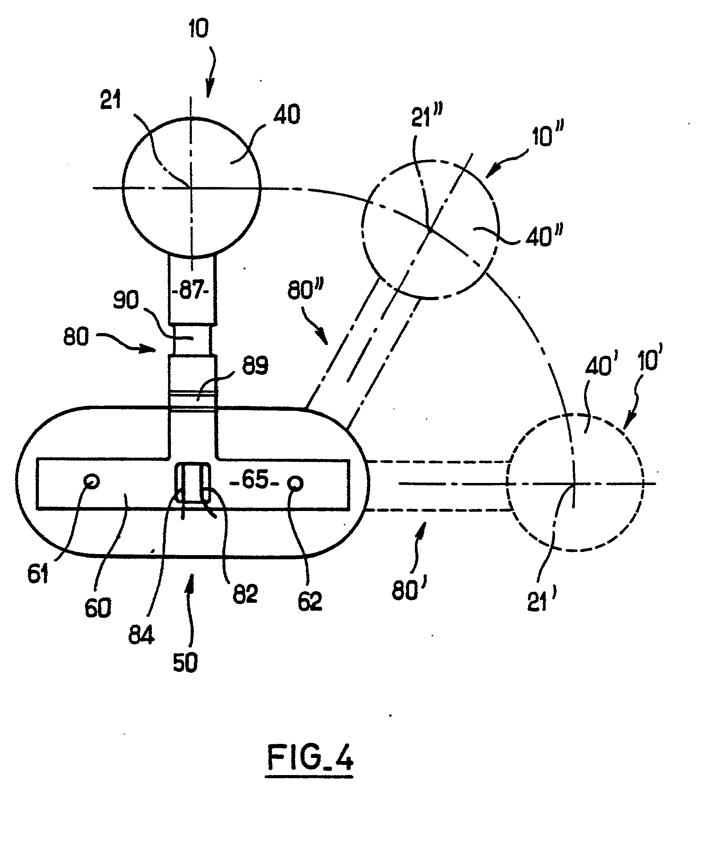

Comme illustré sur la figure 4, l'orientation du corps 60 servant de support aux bobines 70, 71, par rapport à la liaison souple 80, pourra faire l'objet de différents modes de réalisation.

On a ainsi représenté en traits continus sur la figure 4 un mode de réalisation selon lequel le corps 60 s'étend transversalement à la liaison souple 80, à la façon d'un "T".

On a également représenté schématiquement en traits interrompus, sur la figure 4, un autre mode de réalisation selon lequel le corps 60 s'étend dans l'alignement de la liaison souple 80.

On a également esquissé sur la figure 4, en traits mixtes interrompus, une autre orientation relative (de l'ordre de 45°) entre le corps 60 et la liaison souple 80.

On a illustré sur les figures 8 et 9 deux modes d'implantation de dispositifs conformes à la présente invention sur des jantes de profils différents.

On notera que le dispositif conforme à la présente invention permet de positionner le sous-ensemble 10 contenant le canon 20, en creux de jante et de libérer les zones d'appui des talons de pneumatique.

La géométrie de l'enrobage 78 et la longueur de la liaison souple 80 pourront bien entendu être adaptées à chaque cas particulier.

Les principales étapes du processus de fabrication des dispositifs d'alarme conforme à la présente invention sont les suivantes :
- moulage simultané du berceau 27 dans le canon 20 et d'une seule pièce de l'enveloppe 40 sur le canon 20, de la gaine 86 sur les conducteurs 82, 84, et du corps support 60,
- mise en place des supports de bobine 72, 73 sur le corps 60,
- soudure des conducteurs 82, 84 sur les bobines (et le cas échéant soudure des condensateurs associés),
- surmoulage de l'enrobage 78,
- mise en place du pressostat 30 à l'intérieur du canon 20, et soudure des conducteurs 82, 84,
- mise en place de l'opercule 28 et
- sertissage de la jupe 17 du canon 20 sur l'opercule 28.

Bien entendu, la présente invention n'est pas limitée aux modes de réalisation particuliers qui viennent d'être décrits, mais s'étend à toute variante conforme à son esprit.

Ainsi, par exemple, le pressostat 30 pourra être associé à un interrupteur thermosensible connecté en série de son interrupteur interne commandé par la pression du pneumatique comme enseigné par la demande de brevet FR 87 03472 déposée le 13 Mars 1987. Grâce à cette disposition, le dispositif génère une alarme dès lors que la pression interne du pneumatique tombe en-dessous d'une pression seuil prédéterminée ou que la température du pneumatique devient supérieure à une température seuil. Dans l'un ou l'autre cas, l'interrupteur associé s'ouvre et une information correspondante est transmise par le sous-ensemble 50.

## Revendications

1. Dispositif d'alarme pour pneumatique de véhicule comportant de façon connue en soi un pressostat (30) sensible à la pression interne d'un pneumatique, et des moyens (70, 71) de couplage sans fil permettant de transmettre une information liée à l'état du pressostat (30) entre la roue du véhicule entraînée en rotation et le châssis du véhicule, le pressostat (30) et les moyens (70, 71) de couplage sans fil étant intégrés à deux sous-ensembles distincts (10 ; 50), caractérisé par le fait que ces deux sous-ensembles (10 ; 50) sont reliés par une liaison souple électriquement conductrice (80) et que la liaison souple (80) est pourvue d'une amorce de rupture (90).

2. Dispositif d'alarme selon la revendication 1, caractérisé par le fait qu'il comprend un premier sous-ensemble (10) composé d'un pressostat (30) sensible à la pression interne d'un pneumatique et comportant des moyens interrupteurs électriques, un canon (20) destiné à recevoir le pressostat (30) et adapté pour être fixé sur la jante (J), un second sous-ensemble (50) qui comporte un circuit à bobine (70, 71), et une liaison souple (80) qui comprend deux conducteurs électriques (82, 84) reliant les moyens interrupteurs du pressostat (30) au circuit à bobine (70, 71), les conducteurs électriques (82, 84) de la liaison souple (80) étant entourée d'une gaine (86) étanche et souple solidaire, d'une part, d'un corps (60) servant de support au circuit à bobine (70, 71), d'autre part, d'une enveloppe (40) enrobant partiellement le canon (20), la gaine (86), le corps (60) support de circuit à bobine et l'enveloppe (40) étant réalisés d'une pièce par moulage.

3. Dispositif d'alarme selon la revendication 2, caractérisé par le fait que l'enveloppe (40) enrobant partiellement le canon (20) définit, sur la périphérie de celui-ci, un joint annulaire (41) destiné à reposer contre la jante (J).

4. Dispositif d'alarme selon l'une des revendications 2 ou 3, caractérisé par le fait qu'un berceau (27) adapté pour recevoir le pressostat (30) est en outre formé, par moulage, à l'intérieur du canon (20).

5. Dispositif d'alarme selon l'une des revendications 1 à 4, caractérisé par le fait que la liaison souple (80) comprend deux conducteurs électriques entourés d'une gaine étanche et souple (86) et que l'amorce de rupture (90) est formée par une zone annulaire de la gaine, possédant une plus faible épaisseur.

6. Dispositif d'alarme selon l'une des revendications 1 à 5, caractérisé par le fait que le second sous-ensemble (50) comprend un circuit à bobine (70, 71) revêtu d'un enrobage (78).

7. Dispositif d'alarme selon l'une des revendications 1 à 6, caractérisé par le fait que la liaison souple (80) est pourvue d'une surépaisseur d'étanchéité (89).

8. Dispositif d'alarme selon les revendications 6 et 7 prises en combinaison, caractérisé par le fait que la surépaisseur (89) est écrasée lors de la formation de l'enrobage (78) et que la surépaisseur d'étanchéité (89) est ultérieurement relâchée pour se plaquer contre l'enrobage (78).

9. Dispositif d'alarme selon l'une des revendications 1 à 8, caractérisé par le fait que le pressostat (30) est placé dans un canon (20) pourvu ultérieurement d'un opercule perforé (28) maintenu par sertissage.

10. Dispositif d'alarme selon l'une des revendications 1 à 9, caractérisé par le fait que les moyens (70, 71) de couplage sans fil comprennent au moins une bobine électrique (70, 71) enroulée sur un support (72, 73) pourvu d'un embout évasé (76, 77) destiné à être engagé dasn un orifice associé (61, 62) ménagé dans un corps (60) support.

11. Dispositif d'alarme selon l'une des revendications 1 à 10, caractérisé par le fait que le pressostat (30) est placé dans un canon (20) pourvu en périphérie d'un filetage permettant de fixer le canon (20) sur une jante à l'aide d'un écrou (25).

12. Dispositif d'alarme selon l'une des revendications 1 à 11, caractérisé par le fait que le sous-ensemble (50) contenant les moyens (70, 71) de couplage sans fil est pourvu d'éléments autocollants (52).

13. Dispositif d'alarme selon l'une des revendications 1 à 12, caractérisé par le fait que la liaison souple (80) est formée de conducteurs électriques (82, 84) enveloppés d'une gaine souple et étanche (86) réalisée en élastomère.

**14.** Procédé de fabrication du dispositif d'alarme conforme à l'une des revendications 1 à 13, caractérisé par le fait qu'il comprend les étapes consistant à :
- mouler simultanément, et d'une seule pièce, en matériau élastomère, une enveloppe (40) sur un canon fileté (20) adapté pour recevoir le pressostat (30), un corps (60) apte à servir de support à un circuit à bobine (70, 71), et, sur des conducteurs électriques (82, 84), une gaine étanche (86) reliant le corps support (60) à l'enveloppe (40),
- mettre en place au moins un support (72, 73) de circuit à bobine sur le corps support (60),
- souder une première extrémité des conducteurs (82, 84) sur le circuit à bobine (70, 71),
- surmouler un enrobage étanche (78) en matériau thermoplastique, sur le circuit à bobine (70, 71) et son corps support (60), et
- mettre en place le pressostat (30) à l'intérieur du canon (20) et souder la seconde extrémité des conducteurs (82, 84) sur les fils de sortie du pressostat (30).

**Claims**

1. Alarm device for a vehicle tyre comprising in a manner known per se a pressure-sensitive switch (30) which is sensitive to the internal pressure of a tyre, and means (70, 71) for wireless coupling permitting an item of information relating to the state of the pressure-sensitive switch (30) to be transmitted between the vehicle wheel which is driven in rotation and the chassis of the vehicle, the pressure-sensitive switch (30) and the means (70, 71) for wireless coupling being integrated in two distinct subassemblies (10; 50), characterized in that these two subassemblies (10; 50) are connected by a flexible electrically conductive link (80) and in that the flexible link (80) is provided with a disconnecting trigger (90).

2. Alarm device according to Claim 1, characterized in that it comprises a first subassembly (10) consisting of a pressure-sensitive switch (30) which is sensitive to the internal pressure of a tyre and comprising electric disconnecting means, a cylinder (20) intended for receiving the pressure-sensitive switch (30) and adapted to be mounted on the wheel rim (J), a second subassembly (50) which comprises a coil circuit (70, 71), and a flexible link (80) which comprises two electrical conductors (82, 84) connecting the disconnecting means of the pressure-sensitive switch (30) to the coil circuit (70, 71), the electric conductors (82, 84) of the flexible link (80) being surrounded by a sealed and flexible sheath (86) which is integral, on the one hand, with a body (60) sewing as base for the coil circuit (70, 71) and, on the other hand, with a casing (40) partially enclosing the cylinder (20), the sheath (86), the body (60) for sewing as base for the coil circuit and the casing (40) being manufactured from one piece by moulding.

3. Alarm device according to Claim 2, characterized in that the casing (40) partially enclosing the cylinder (20) defines, on the periphery of the latter, an annular joint (41) intended to rest against the wheel rim (J).

4. Alarm device according to one of Claims 2 or 3, characterized in that a mount (27) adapted to receive the pressure-sensitive switch (30) is in addition formed, by moulding, on the interior of the cylinder (20).

5. Alarm device according to one of Claims 1 to 4, characterized in that the flexible link (80) comprises two electrical conductors surrounded by a sealed and flexible sheath (86) and in that the disconnecting trigger (90) is formed by an annular region of the sheath, said region being less thick.

6. Alarm device according to one of Claims 1 to 5, characterized in that the second subassembly (50) comprises a coil circuit (70, 71) covered by an encapsulation (78).

7. Alarm device according to one of Claims 1 to 6, characterized in that the flexible link (80) is extra thick so as to form a seal (89).

8. Alarm device according to Claims 6 and 7 taken in combination, characterized in that the extra thickness (89) is squashed during the formation of the encapsulation (78) and in that the sealed extra thickness (89) is subsequently released in order to press itself against the encapsulation (78).

9. Alarm device according to one of Claims 1 to 8, characterized in that the pressure-sensitive switch (30) is located in a cylinder (20) provided subsequently with a perforated percussion cap (28) held in place by crimping.

10. Alarm device according to one of Claims 1 to 9, characterized in that the means (70, 71) for wireless coupling comprise at least one electric coil (70, 71) wound on a support (72, 73) provided with a flared joining piece (76, 77) intended to be engaged in an associated opening (61, 62) recessed in a base body (60).

11. Alarm device according to one of Claims 1 to 10, characterized in that the pressure-sensitive switch (30) is located in a cylinder (20) provided on the periphery with a thread permitting the cylinder (20) to be fixed on a wheel rim with the aid of a nut (25).

12. Alarm device according to one of Claims 1 to 11, characterized in that the subassembly (50) containing the means (70, 71) for wireless coupling is provided with self-adhesive elements (52).

13. Alarm device according to one of Claims 1 to 12, characterized in that the flexible link (80) is formed from electrical conductors (82, 84) encased in a flexible and sealed sheath (86) fabricated in elastomer.

14. Process for manufacturing the alarm device according to one of Claims 1 to 13, characterized in that it comprises the steps consisting of:
– moulding simultaneously and in a single piece and in elastomer material a casing (40) over a threaded cylinder (20) adapted to receive the pressure-sensitive switch (30), a body (60) suitable for serving as base to a coil circuit (70, 71) and, over electrical conductors (82, 84), a sealed sheath (86) joining the support body (60) to the casing (40),
– installing at least one coil circuit base (72, 73) over the base body (60),

– soldering a first end of the conductors (82, 84) onto the coil circuit (70, 71),
– moulding a sealed encapsulation (78) consisting in thermoplastic material onto the coil circuit (70, 71) and its base body (60), and
– installing the pressure-sensitive switch (30) inside the cylinder (20) and soldering the second end of the conductors (82, 84) onto the exit wires from the pressure-sensitive switch (30).

## Patentansprüche

1. Alarmvorrichtung für Fahrzeugluftreifen, welche in an sich bekannter Weise einen den Innendruck im Luftreifen fühlenden Druckaufnehmer (30) und eine drahtlose Kuppelvorrichtung (70, 71) zum Übertragen einer den Zustand des Druckaufnehmers (30) betreffende Information zwischen dem zu einer Drehung veranlaßten Fahrzeugrad und dem Fahrzeugchassis aufweist, wobei der Druckaufnehmer (30) und die drahtlose Kuppelvorrichtung in zwei getrennte Unter-Baugruppen (10; 50) integriert sind, dadurch gekennzeichnet, daß die beiden Unter-Baugruppen (10; 50) durch eine flexible, elektrisch leitende Verbindung (80) verbunden sind, und daß die Verbindung (80) mit einer Sollbruchstelle (90) versehen ist.

2. Alarmvorrichtung nach Anspruch 1, dadurch gekennzeichnet, daß sie eine erste Unter-Baugruppe (10) mit einem Druckaufnehmer (30), welcher den Innendruck eines Luftreifens fühlt und elektrische Unterbrechungsmittel umfaßt, eine Hülse (20) zum Aufnehmen des Druckaufnehmers (30) und zur Befestigung an der Felge (J), eine zweite Unter-Baugruppe (50) mit einem Spulenkreis (70, 71) und einer weichen Verbindung (80) mit zwei elektrischen Leitern (82, 84), welche die elektrischen Unterbrechungsmittel des Druckaufnehmers (30) mit dem Spulenkreis (70, 71) verbinden, wobei die elektrischen Leiter (82, 84) der flexiblen Verbindung (80) von einer flexiblen dichten Hülle (86), die einerseits mit einem Körper zum Unterstützen des Spulenkreises (70, 71) und andererseits mit einem die Hülse (20) teilweise umgebenden Mantel (40) zusammenhängt, wobei die Hülle (86) und der Körper (60) zum Unterstützen des Spulenkreises und der Mantel (40) durch Formen einstückig ausgebildet sind.

3. Alarmvorrichtung nach Anspruch 2, dadurch gekennzeichnet, daß der die Hülse (20) teilweise umkleidende Mantel (40) an seinem Umfang einen Ringwulst (41) hat, der zum Anliegen an der Felge (J) bestimmt ist.

4. Alarmvorrichtung nach Anspruch 2 oder 3, dadurch gekennzeichnet, daß ein zum Aufnehmen des Druckaufnehmers (30) bestimmtes Tragteil (27) durch Formen im Inneren der Hülse (20) ausgebildet ist.

5. Alarmvorrichtung nach einem der Ansprüche 1 bis 4, dadurch gekennzeichnet, daß die flexible Verbindung (80) zwei von einer dichten und flexiblen Hülle (86) umgebene elektrische Leiter aufweist, und daß die Sollbruchstelle (90) von einer Ringzone der Hülle von geringerer Stärke gebildet ist.

6. Alarmvorrichtung nach einem der Ansprüche 1 bis 5, dadurch gekennzeichnet, daß die zweite Unter-Baugruppe (50) einen von einer Umkleidung (78) eingefaßten Spulenkreis (70, 71) aufweist.

7. Alarmvorrichtung nach einem der Ansprüche 1 bis 6, dadurch gekennzeichnet, daß die flexible Verbindung (80) mit einem Dichtwulst (89) versehen ist.

8. Alarmvorrichtung nach Anspruch 6 und 7, dadurch gekennzeichnet, daß der Dichtwulst (89) beim Formen der Umkleidung (78) gestaucht und schließlich zum Anlegen an die Umkleidung (78) freigegeben wird.

9. Alarmvorrichtung nach einem der Ansprüche 1 bis 8, dadurch gekennzeichnet, daß der Druckaufnehmer (30) in einer vorher mit einem durchbohrten Deckel (28) versehenen Hülse (20) plaziert wird, wobei der Deckel durch eine Klemmverbindung gehalten wird.

10. Alarmvorrichtung nach einem der Ansprüche 1 bis 9, dadurch gekennzeichnet, daß die drahtlose Kuppelvorrichtung (70, 71) mindestens eine elektrische Spule (70, 71) umfaßt, welche um einen Träger (72, 73) mit einem Vorsprung (76, 77) gewickelt ist, der in einer zugehörigen Öffnung (61, 62) im Körper (60) gehalten ist.

11. Alarmvorrichtung nach einem der Ansprüche 1 bis 10, dadurch gekennzeichnet, daß der Druckaufnehmer (30) in einer am Umfang mit einem Gewinde versehenen Hülse (20) aufgenommen ist, wobei das Gewinde die Befestigung der Hülse (20) an einer Felge mittels einer Mutter (25) ermöglicht.

12. Alarmvorrichtung nach einem der Ansprüche 1 bis 11, dadurch gekennzeichnet, daß die Unter-Baugruppe (50) mit der drahtlosen Kuppelvorrichtung (70, 71) mit selbstklebenden Elementen (52) versehen ist.

13. Alarmvorrichtung nach einem der Ansprüche 1 bis 12, dadurch gekennzeichnet, daß die flexible Verbindung (80) von elektrischen Leitern (82, 84) gebildet ist, welche mit einer flexiblen und dichten Hülle (86) aus einem Elastomer umhüllt sind.

14. Verfahren zum Herstellen einer Alarmvorrichtung nach einem der Ansprüche 1 bis 13, gekennzeichnet durch die folgenden Schritte:
– Gleichzeitiges, einstückiges Formen aus einem Elastomer eines Mantels (40) um eine Gewindehülse (20) zum Aufnehmen eines Druckaufnehmers (30), eines Körpers (60) zum Unterstützen einer Spulenschaltung (70, 71) und, um elektrische Leiter (82, 84), einer dichten Hülle (86), welche den Stützkörper (60) mit dem Mantel (40) verbindet;
– Plazieren mindestens eines Trägers (72, 73) des Spulenkreises am Körper (60);
– Verschweißen eines ersten Endes der Leiter (82, 84) mit dem Spulenkreis (70, 71);
– Formen einer dichten Umkleidung (78) aus thermoplastischem Werkstoff um den Spulenkreis (70, 71) und den ihn stützenden Körper (60) und
– Plazieren des Druckaufnehmers (30) in der Hülse (20) und Verschweißen des zweiten Endes der Leiter (82, 84) mit dem Ausgangsdraht des Druckaufnehmers (30).

FIG_1

FIG_2

FIG_3

FIG.4

FIG.5

FIG.6

FIG.7

FIG.8

FIG.9